# EUROPEAN PATENT APPLICATION

(11) **EP 4 679 509 A1**
(43) Date of publication of application: **14.01.2026**
(21) Application number: 24892484.7
(22) Date of filing: 30.09.2024

(54) **COMPOSITE SEPARATOR AND LITHIUM-ION BATTERY USING SAME**

(30) Priority: 17.05.2024 CN 202410622530; 17.05.2024 CN 202410622499
(71) Applicant: Eve Power Co., Ltd., Jingmen, Hubei 448000 (CN)
(72) Inventor: LIU, Fanfen, Jingmen, Hubei 448000 (CN); ZHU, Zhiyuan, Jingmen, Hubei 448000 (CN); ZHANG, Huan, Jingmen, Hubei 448000 (CN); YUAN, Dingding, Jingmen, Hubei 448000 (CN); HE, Wei, Jingmen, Hubei 448000 (CN)
(74) Representative: Berggren Oy
(86) International application number: PCT/CN2024/122764
(87) International publication number: WO 2025/236522

(57) **Abstract**

The present disclosure provides a composite separator including a porous substrate and a porous active layer. The porous active layer is disposed on at least one surface of the porous substrate, the porous active layer includes a base coating layer and non-adhesive organic particles C embedded in the base coating layer. The base coating layer includes inorganic particles A and adhesive polymers B, and the base coating layer and the porous substrate are bonded by the adhesive polymers B. The average thickness of the base coating layer is h, h≥0.5µm. The ratio of a mass of the non-adhesive organic particles C to a mass of the base coating layer is (2 to 20):(70 to 90). The particle size distribution of the non-adhesive organic particles C satisfies (a) and (b): (a) 1<D₅₀/h≤5; (b) (D₉₀-D₁₀)/D₅₀≤3.

## Description

The present disclosure claims priority to Chinese Patent Application No. 2024106225303, filed on May 17, 2024, the disclosure of which are incorporated herein by reference in their entirety.

### TECHNICAL FIELD

The present disclosure relates to the technical field of lithium-ion batteries, and in particular, to a composite separator and a lithium-ion battery using the same.

### BACKGROUND

A lithium-ion battery generally consist mainly of a positive electrode, a negative electrode, a separator, an electrolyte, and a battery shell. The separator is one of the key inner component, and its main function is to separate the positive electrode and the negative electrode of a battery, so as to avoid short circuit caused by contacting between the positive electrode and the negative electrode. With the development of the new energy industry, the requirements for the capacity of the lithium-ion batteries are getting higher and higher. At present, the capacity of lithium-ion batteries is generally increased by increasing the volume of the core. For larger cores, the problems of loose internal structure and insufficient mechanical strength of the core pack are easy to occur, which will further lead to the difficulty of putting the core into the shell and inconvenient assembly, or aggravate the displacement of the electrode sheets or even damage the core due to extrusion of the core during the assembly process. However, during the operation of the lithium-ion battery, with the increase of the number of charging and discharging cycles, the core tends to be deformed. As the deformation of the battery intensifies, the overhang between the positive and negative electrodes may be obviously changed, and even more, the lithium-ion battery may be deformed, which will seriously affect the safety and reliability of the battery.

In order to suppress the deformation of the core, a common method used in the industry is to spray a coating layer containing PVDF on the surface of the separator, and the PVDF in the coating is used to bond the separator to the electrode sheet.

### SUMMARY

### TECHNICAL PROBLEM

The PVDF on the surface of the diaphragm tends to float to a composite surface of the separator and the electrode sheet during processing, thereby blocking the pores on the composite surface, which is not conducive to the penetration of electrolyte, and the number of lithium ion transmission channels decreases, resulting in increase of the internal resistance of the battery and affecting the performance such as the rate performance of the battery.

### TECHNICAL SOLUTIONS

In a first aspect, the present disclosure provides a composite separator, which includes a porous substrate and a porous active layer. The porous active layer is disposed on at least one surface of the porous substrate. The porous active layer includes a base coating layer and non-adhesive organic particles C embedded in the base coating layer. The base coating layer includes inorganic particles A and adhesive polymers B, and the base coating layer and the porous substrate are bonded by the adhesive polymers B. An average thickness of the base coating layer is h, and h≥0.5 µm. A ratio of a mass of the non-adhesive organic particles C to a mass of the base coating layer is (2 to 20):(70 to 90). A particle size distribution of the non-adhesive organic particles C satisfies (a) and (b): (a) 1<D₅₀/h≤5; (b) (D₉₀-D₁₀)/D₅₀≤3. The ratio of the mass of the non-adhesive organic particles C to the mass of the base coating layer may be 2:90, 20:90, 2:70, 20:70, 10:80, etc., but is not limited to the listed values, and other unlisted values within this numerical range are also applicable. A ratio of the average particle size D₅₀ of the non-adhesive organic particles C to the average thickness h of the base coating layer may be 1.25, 2, 3, 4, 5, etc., but is not limited to the listed values, and other unlisted values within this numerical range are also applicable.

In a second aspect, the present disclosure provides a lithium-ion battery including a core. The core includes an electrode sheet and the above-mentioned composite separator.

### BENEFICIAL EFFECTS

In the composite separator provided in the present disclosure, the non-adhesive organic particles C can form obvious convex structures on a surface of the base coating layer. In this way, when the composite separator is compounded with the electrode sheets, the composite separator is connected to the electrode sheets through the convex structures. The convex structures are inserted into the active coating layer of the electrode sheets, so that the composite separator and the electrode sheets are compounded in a mechanical interlocking manner. At the same time, the convex structures prevent direct contact between the electrode sheets and the base coating layer, so that a certain gap can be formed between the electrode sheets and the base coating layer. In this way, the electrode sheets are not be directly attached to the base coating layer of the composite separator, thus avoiding blockage of the pores on the surface of the composite separator and the electrode sheets caused by the floating of the adhesive polymers B in the base coating layer, and ensuring the smooth transmission of lithium ions between the separator and the electrode sheets. Furthermore, by limiting the mass of the non-adhesive organic particles C and the base coating layer, and limiting the particle size distribution of the non-adhesive organic particles C ((D₉₀-D₁₀)/D₅₀=0.5 to 3), which on the one hand ensures the formation of a sufficient number of protrusion structures with concentrated sizes and appropriate sizes on the surface of the porous active layer, thus ensuring a stable connection between the composite separator and the electrode sheets, and on the other hand, it is beneficial to further reduce the lithium ion transmission impedance in the core composed of the composite separator and the electrode sheets, so that the lithium ion transmission impedance of the core can be kept in a low level range for a long time, and thus the care can maintain a high-efficiency and stable lithium ion transmission effect for a long time.

### DETAILED DESCRIPTION

In some embodiments, a particle size distribution of the non-adhesive organic particles C satisfies (D₉₀-D₁₀)/D₅₀=0.5 to 3. The value of (D₉₀-D₁₀)/D₅₀ of the non-adhesive organic particles C may be 0.5, 1, 1.5, 2, 2.5, 3, etc., but is not limited to the listed values, and other unlisted values within this numerical range are also applicable.

The non-adhesive organic particles C in this technical solution should be distinguished from the adhesive polymers B. The non-adhesive organic particles C are non-viscous at normal temperature (25 °C ± 5 °C).

In some embodiments, the adhesive polymers B include at least one of polyvinylidene fluoride, polyvinylidene fluoride-co-hexafluoropropylene, polyvinylidene fluoride-co-trichloroethylene, polymethylmethacrylate, polyacrylonitrile, polyvinylacetate, polyethylene-co-vinyl acetate, polyimide and polyethylene oxide.

In some embodiments, the non-adhesive organic particles C include acrylate polymers, and the acrylate polymers include at least one of polymethyl acrylates, polyethyl acrylates, polybutyl acrylates, polymethyl methacrylates, butyl acrylate-styrene copolymers, ethylene-acrylic acid copolymers, ethylene-methyl acrylate copolymers, ethylene-ethyl acrylate copolymers, ethylene-butyl acrylate copolymers, ethylene-methyl methacrylate copolymers.

In some embodiments, average thickness h of the base coating layer is greater than or equal to 1 µm and less than 8 µm. For example, the average thickness h of the base coating may be 1 µm, 2 µm, 3 µm, 4 µm, 5 µm, 6 µm, etc., but is not limited to the listed values, and other unlisted values within this numerical range are also applicable. When the average thickness h of the base coating is within the above-mentioned range, it is possible to better balance the heat shrinkage resistance and lithium ion transmission dynamical characteristics of the composite separator better. In addition, since D₅₀ of the non-adhesive organic particles C and the average thickness h of the base coating satisfy a specific proportional relationship, by regulating the average thickness h of the base coating layer, the gap between the composite separator and the electrode sheets is indirectly controlled when the composite separator and the electrode sheets are composited, thereby further improving the penetration effect of the electrolyte between the composite separator and the electrode sheets on the premise of ensuring good structural stability of the core composed of the composite separator and the electrode sheets.

In some embodiments, D₅₀ of the non-adhesive organic particles C ranges from 3 µm to 8 µm. The average particle size D₅₀ of the non-adhesive organic particles C may be 3 µm, 4 µm, 5 µm m, 6 µm, 7 µm, 8 µm, etc., but is not limited to the listed values, and other unlisted values within this numerical range are also applicable. By making the particle size distribution of the non-adhesive organic particles C satisfy the above-mentioned characteristics, it is beneficial to improve the structural stability of the porous active layer, and the non-adhesive organic particles C can be better embedded in the base coating layer, thereby enhancing the bonding stability between the composite separator and the electrode sheets.

In some embodiments, the particle size distribution of the non-adhesive organic particles C further satisfies the following conditions: D₁₀=0.5 to 4 µm, and D₉₀=5 to 18 µm. D₁₀ of the non-adhesive organic particle C may be 0.5 µm, 1 µm, 2.5 µm, 3 µm, 4 µm, etc., but is not limited to the listed values, and other unlisted values within this numerical range are also applicable. D90 of the non-adhesive organic particles C may be 5 µm, 6.5 µm, 11 µm, 15 µm, 18 µm, etc., but is not limited to the listed values, and other unlisted values within this numerical range are also applicable.

In some embodiments, the ratio of D₅₀ of the inorganic particles A to D₅₀ of the non-adhesive organic particles C is (0.05 to 0.4):1. The ratio of D₅₀ of the inorganic particles A to D₅₀ of the non-adhesive organic particles C may be 0.05:1, 0.1:1, 0.2:1, 0.3:1, 0.4:1, etc., but is not limited to the listed values, and other unlisted values within this numerical range are also applicable. According to the present disclosure, the average particle sizes of the inorganic particles A and the non-adhesive organic particles C are comprehensively controlled, so that the inorganic particles A can be tightly filled around the non-adhesive organic particles C. In this way, on the premise of not reducing the porosity of the porous active layer, the non-adhesive organic particles C can be more firmly embedded in the base coating layer, while the porous active coating layer maintains a higher porosity, which can provide more transmission channels for lithium ions to enter the base coating layer and transmit in the base coating layer. In other words, the core using the composite separator can maintain good structural stability under the working state of rapid lithium ion transmission, that is, it can better meet the requirements of fast charging applications.

In some embodiments, the ratio of D₅₀ of the inorganic particles A to the average thickness h of the base coating layer is 1:(1 to 15), and a mohs hardness of the inorganic particles A ranges from 2 to 10. For example, the ratio of D₅₀ of the inorganic particles A to the average thickness h of the base coating layer may be 1: 1, 1:2.5, 1: 5, 1: 10, 1: 15, etc., but is not limited to the numerical values enumerated, and other numerical values not enumerated within this numerical range are equally applicable. The inorganic particle A may have a Mohs hardness of 2, 3, 5, 5.5, 7, 10, etc., but is not limited to the listed values, and other unlisted values within this numerical range are also applicable. The inorganic particles A are the main component of of the base coating layer. Based on the mohs hardness range of the inorganic particles A, the size of the inorganic particles A and the average thickness of the base coating layer are further comprehensively controlled, so that the filling condition of the inorganic particles A in the base coating layer and the internal stress distribution of the inorganic particles A in the base coating can be limited. The composite separator having inorganic particles A and the base coating layer satisfying the above characteristics has excellent flexibility and heat shrinkage resistance.

In some embodiments, inorganic particles A include at least one of aluminum oxide (Al₂O₃), boehmite (AlOOH), titanium dioxide (TiO₂), and silicon dioxide (SiO₂).

In some embodiments, the mohs hardness of the inorganic particles A ranges from 2 to 5. For example, the mohs hardness of the inorganic particles A may be 2, 2.5, 3, 4, 5, etc., but is not limited to the listed values, and other unlisted values within this numerical range are also applicable.

In some embodiments, (D₉₀-D₁₀)/D₅₀ of the inorganic particles A ranges from 0.5 to 2. For example, the value of (D₉₀-D₁₀)/D₅₀ of the inorganic particles A may be 0.5, 1, 1.5, 1.8, 2, etc., but is not limited to the listed values, and other unlisted values within this numerical range are also applicable. In a case that the value of (D₉₀-D₁₀)/D₅₀ of the inorganic particles A is within the above range, the coating quality of the porous active layer can be further optimized, which is reflected in better bonding effect between the base coating layer and the porous substrate, thus the heat shrinkage resistance of the base coating layer is better, resulting in higher heat resistance stability of the composite separator. On the other hand, the size of the gap between the composite separator and the electrode sheets can be better controlled by improving the flatness of the base coating layer.

In some embodiments, the non-adhesive organic particles C include acrylate polymers, and the glass transition temperature of the acrylate polymers ranges from 30 °C to 90 °C. For example, the Tg value of the acrylate polymers may be 30 degrees, 40 degrees, 50 degrees, 60 degrees, 70 degrees, 80 degrees, 90 degrees, etc., but is not limited to the listed values, and other unlisted values within this numerical range are also applicable. By using the above-mentioned acrylate polymers as the non-adhesive organic particles C, it is easier to establish a mechanical interlocking structure between the composite separator and the electrode sheets, thus strengthening the connection between the composite separator and the electrode sheets.

In some embodiments, the acrylate polymers include at least one of butyl acrylate-styrene copolymers, ethylene-acrylic acid copolymers, ethylene-methyl methacrylate copolymers.

In some embodiments, in the porous active layer, a ratio of the inorganic particles A to the adhesive polymers B to the non-adhesive organic particles C is (70 to 90):(2 to 15):(2 to 20) in case of calculating parts by mass. For example, the mass ratio of the inorganic particles A to the adhesive polymers B to the non-adhesive organic particles C may be 70:2:2, 70:15:20, 70:2:20, 70:15:2, 90:15:20, 90:2:2, 90:15:2, 90:2:20, etc., but is not limited to the listed values, and other unlisted values within this numerical range are also applicable.

In some embodiments, in the porous active layer, a ratio of the inorganic particles A to the adhesive polymers B to the non-adhesive organic particles C is (80 to 85):(7 to 12):(5 to 10) in case of calculating parts by mass. For example, the mass ratio of the inorganic particles A to the adhesive polymers B to the non-adhesive organic particles C may be 80:7:5, 80:12:10, 80:7:10, 80:12:5, 85:12:10, 85:7:5, 85:7:10, 85:12:5, etc., but is not limited to the listed values, and other unlisted values within this numerical range are also applicable.

In some embodiments, the porous substrate is selected from at least one of polyethylene, polypropylene, polybutene, and polypentene.

According to a second aspect of the present disclosure, a lithium-ion battery is provided. The lithium-ion battery includes a core, and the core includes electrode sheets and a composite separator as described above.

In some embodiments, in the core, the composite separator is spaced apart from the electrode sheet, the porous active layer is disposed on one side of the composite separator facing the electrode sheet, the composite separator is connected to the electrode sheet through the non-adhesive organic particles C contained in the porous active layer, a gap is formed between the electrode sheet and the base coating layer disposed facing the electrode sheet after hot pressing, and an average width d of the gap after hot pressing ranges from 0.05 µm to 3 µm. For example, the average width d of the gap may be 0.05 µm, 0.2 µm, 0.5 µm, 1 µm, 2 µm, 3 µm, etc., but is not limited to the listed values, and other unlisted values within this numerical range are also applicable. In each core, the stacking direction of the electrode sheets and the composite separator is defined as the average thickness direction. The total thickness of the core is D, the total thickness of the porous substrate of the composite separator included in the core is d1, the total thickness of the base coating layer of the composite separator included in the core is d2, and the total thickness of the electrode sheets included in the core is d3. The number of gaps is n. The average width d of the gap is calculated as follows: D= (D-d1-d2-d3)/n.

In the core of the above-mentioned lithium-ion battery, the composite separator can be fixedly connected to the electrode sheets, and a gap with an appropriate width is formed between the composite separator and the electrode sheets, so that the transmission resistance of lithium ions between the composite separator and the electrode sheets is reduced through the arrangement of the gap, and the core can maintain good thickness consistency and efficient and stable lithium ion transmission effect for a long time.

In some embodiments, the method for preparing the above-mentioned core includes stacking the composite separator and the electrode sheets in sequence, and then subjecting the composite separator and the electrode sheets to a hot pressing treatment at a hot pressing temperature of 50 °C to 100 °C and a hot pressing pressure of 600 MPa to 3000 MPa. For example, the hot pressing temperature may be 50 degrees, 60 degrees, 70 degrees, 80 degrees, 90 degrees, 100 degrees, etc., but is not limited to the listed values, and other unlisted values within this numerical range are also applicable. The hot pressing pressure may be 600 MPa, 1000 MPa, 1500 MPa, 2000 MPa, 3000 MPa, etc., but is not limited to the listed values, and other unlisted values within this numerical range are also applicable.

In some embodiments, the hot pressing temperature ranges from 70°C to 90 °C and the hot pressing pressure ranges from 1200 MPa to 2000 MPa. The hot pressing temperature may be 70 degrees, 75 degrees, 80 degrees, 90 degrees, etc., but is not limited to the listed values, and other unlisted values within this numerical range are also applicable. The hot pressing pressure may be 1200 MPa, 1500 MPa, 1700 MPa, 1800 MPa, 2000 MPa, etc., but is not limited to the listed values, and other unlisted values within this numerical range are also applicable.

### Example 1:

### 1. Preparation of composite separator

### (1) Preparation of composite separators as experimental groups:

The composite separator as experimental groups includes a porous substrate and a porous active layer coated on the surface of the porous substrate. The main components of coating slurry used to prepare the porous active layer include inorganic particles A, adhesive polymers B, and non-adhesive organic particles C. In this example, boehmite (with a mohs hardness of 3; D₁₀=0.1 µm, D₅₀=0.4 µm, D₉₀=1.1 µm) is used as a inorganic particle A, polyvinylacetate is used as an adhesive polymer B, and butyl acrylate-styrene copolymer (tg=55 °C) is used as a non-adhesive organic particle C. The coating slurry used to prepare the composite separator of the experimental group is prepared as follows: weighing the desired materials in parts by mass, specifically, weighing 80 parts of boehmite, 10 parts of polyvinylacetate, 10 parts of butyl acrylate-styrene copolymer, 5 parts of leveling agent, and 120 parts of pure water; mixing the above-mentioned materials, and fully stirring until uniform, thereby obtaining the above-mentioned coating slurry. A polyethylene film is used as a porous substrate, the coating slurry prepared above is coated on two surfaces of the porous substrate respectively. The coating thickness is controlled based on the preset thickness of porous active layer, thereby obtaining a semi-finished separator. The semi-finished separator is transferred into an oven and fully dried, thereby forming a porous active layer on two surfaces of the porous substrate which are arranged oppositely to each other. The porous coating layer includes a base coating layer and the non-adhesive organic particles C embedded in the base coating layer. The base coating layer is composed of inorganic particles A and adhesive polymers B, and the non-adhesive organic particles C protrude from the surface of the base coating layer, thereby preparing a composite separator. In the process of preparing the composite separator in this example, different composite separators are obtained by adjusting the particle size distribution of the non-adhesive organic particles C used for preparing the coating slurry and/or the average thickness h of the base coating layer. The different composite separators are numbered, and the numbering of the composite separators and the corresponding structural composition characteristics are shown in Table 1.

### (2) Preparation of composite separators as control groups:

In addition, as a control, a composite separator without non-adhesive organic particles C is prepared in this example, and the composite separator is used as a control separator. The method for preparing the control separator is as follows: referring to the raw material composition of the coating slurry used to prepare the composite separator of the experimental group in this example, the inorganic particles A, adhesive polymers B, leveling agent, and pure water that are the same as those for preparing the above mentioned coating slurry are used, wherein when calculated parts by mass, 80 parts of inorganic particles A (boehmite), 10 parts of adhesive polymers B (polyvinylacetate), 5 parts of leveling agent, and 120 parts of pure water are mixed and fully stirred until uniform, thereby obtaining inorganic particle slurry. Polyethylene film is used as a porous substrate, which is the same as the polyethylene film used in the preparation of the composite separator in the above experimental group. The inorganic particle slurry prepared above is coated on two surfaces of the porous substrate respectively, and the coating thickness is controlled based on the preset porous active layer thickness, thereby obtaining a semi-finished separator. The semi-finished separator is transferred into an oven and fully dried, thereby forming a porous active layer on two surfaces of the porous substrate which are arranged oppositely to each other. The porous coating is composed of inorganic particles A and adhesive polymers B, thereby obtaining a control composite separator, which is marked as a control separator. The difference between the composition of the composite separator in the above-mentioned experimental group and the control group lies in that the non-adhesive organic particles C are not contained in the control separator.

Table 1 shows the related information of the composite separator in the experimental group and the control separator prepared in this example. In the process of preparing these composite separators, except for the particle size distribution of the selected non-adhesive organic particles C and the average thickness h of the basic coating layer, the materials used to prepare the composite separators and the involved process operations are strictly consistent. "D₅₀/h" shown in Table 1 refers to the ratio of D₅₀ of the non-adhesive organic particles C used in the composite separator to the average thickness h of the base coating layer of the composite separator. In addition, since the non-adhesive organic particles C are not used in the preparation process of the control separator, in Table 1, the area of the non-adhesive organic particles C corresponding to the control separator is represented by "-".

**Table 1. Related composition and structural information of composite separator [0040]**

| Number of composite separator | Particle size distribution of non-adhesive organic particles C | | | | Average thickness of base coating layer h/µm | D₅₀/h |
|---|---|---|---|---|---|---|
| | D₁₀/µm | D₅₀/µm | D₉₀/µm | (D₉₀-D₁₀)/D₅₀ | | |
| Composite separator 1-1 | 3.5 | 4 | 5.5 | 0.5 | 1 | 4 |
| Composite separator 1-2 | 3 | 4 | 15 | 3 | 1 | 4 |
| Composite separator 1-3 | 2.5 | 4 | 6.5 | 1 | 1 | 4 |
| Composite separator 1-4 | 1 | 2 | 3 | 1 | 1 | 2 |
| Composite separator 1-5 | 3 | 8 | 11 | 1 | 6 | 1.33 |
| Composite separator 1-6 | 5 | 8 | 13 | 1 | 5 | 1.6 |
| Composite separator 1-7 | 1 | 2 | 6 | 2.5 | 1 | 2 |
| Composite separator 1-8 | 3 | 10 | 16 | 1.3 | 2 | 5 |
| Composite separator 1-9 | 3 | 10 | 13 | 1 | 8 | 1.25 |
| Composite separator 1-10 | 1 | 2 | 3 | 1 | 0.5 | 4 |
| Composite separator D1 | 1 | 4 | 17 | 4 | 1 | 4 |
| Composite separator D2 | 1 | 1.5 | 2.2 | 0.8 | 0.3 | 5 |
| Composite separator D3 | 0.9 | 1 | 1.8 | 0.9 | 2 | 0.5 |
| Control separator | - | - | - | - | 1 | - |

### 2. Testing for peeling strength of composite separators and electrode sheets

### Test object

The composite separator prepared in this example is used as a test object.

### Test method

### (1) Preparation of positive electrode sheet for testing

Positive electrode sheet A: binder PVDF is added into NMP at a mass ratio of 1:8 to obtain a glue solution, then lithium iron phosphate (LFP), a conductive agent acetylene black, and a glue solution are mixed at a mass ratio of 97:1:2, and then stirred under the action of vacuum stirrer until the system is uniform to obtain a positive electrode slurry. The positive electrode slurry is uniformly coated on a positive electrode current collector with a coating thickness of 120 µm. After drying at room temperature, it was transferred to an oven for further drying, and then subjected to cold pressing and slitting to obtain the positive electrode sheet A.

Positive electrode sheet B: binder PVDF is added into NMP at a mass ratio of 1:8 to obtain a glue solution, then lithium iron phosphate (LFP), a conductive agent acetylene black, and a glue solution are mixed at a mass ratio of 97:1:2, and then stirred under the action of vacuum stirrer until the system is uniform to obtain a positive electrode slurry 1. Binder PVDF is added into NMP at a mass ratio of 1:8 to obtain a glue solution, then lithium iron phosphate (LFP), a conductive agent acetylene black, and a glue solution are mixed at a mass ratio of 97:1:2, and then stirred under the action of vacuum stirrer until the system is uniform. Then butyl acrylate-styrene copolymer (tg=55 °C) is added thereto, wherein the particle size distribution and weight of the butyl acrylate-styrene copolymer are consistent with those of the butyl acrylate-styrene copolymer used in the process of preparing the composite separators 1-3. Followed by stirring fully to obtain the positive electrode slurry 2. The positive electrode slurry 1 is evenly coated on the positive electrode current collector with a coating thickness of 119 µm. After drying at room temperature, the coating surface formed by the positive electrode paste 1 is evenly coated with the positive electrode slurry 2 with a coating thickness of 1 µm. After drying at room temperature, it is transferred to an oven for further drying, and then subjected to cold pressing and slitting to obtain the positive electrode sheet B. The cold pressing and slitting operations performed during the preparation of positive electrode sheet A and the preparation of positive electrode sheet B are consistent.

### (2) Preparation of composite separator/positive electrode sheet composite for testing peeling strength

The composite separator with a size of 20mm*300mm and the above prepared positive electrode sheet (positive electrode sheet A or positive electrode sheet B) are cut, and stacked with each other. The hot press temperature is set to 90 degrees, the pressure is set to 600 kg, and the hot pressing time is set to 3 s. The stacked composite separators/positive electrode sheets are firmly bonded by a hot press to form composite separators/positive electrode sheet composites. The composite separators/positive electrode sheet composites prepared according to the above operation are numbered as sample 1-1, sample 1-2, sample 1-3, sample 1-4, sample 1-5, sample 1-5; sample 1-6, sample 1-7, sample 1-8, sample 1-9, sample 1-10, sample D1, sample D2, sample D3, control sample A, and control sample B. The numbers corresponding to these composite separators/positive electrode sheet composites and the composite separators and the positive electrode sheets included therein are shown in Table 2. The edges of the composite separators/positive electrode sheet composites are cut to a size of 10 mm*150 mm. The composite separator and the positive electrode sheet composites are slightly separated at the edge of the composite separators/positive electrode sheet composites, and clamped at both ends of the peeling strength tester respectively. Then the instrument is started to tear the composite separators and the positive electrode sheets, and peeling strength at the time of peeling is recorded.

### Test results

The test results are shown in Table 2. Each of composite separator 1-1, the composite separator 1-2, the composite separator 1-3, the composite separator 1-4, the composite separator 1-5, the composite separator 1-6, the composite separator 1-7, the composite separator 1-8, the composite separator 1-9, and the composite separator 1-10 contains non-adhesive organic particles C, and the surfaces of base coating layers of the above composite separators are provided with protruding structures formed by the non-adhesive organic particles C in the sample to be tested. When the composite separators and the positive electrode sheets are respectively pressed, the non-adhesive organic particles C protruding from the surface of base coating layer of the composite separator are pressed into the positive electrode active coating layer of the positive electrode sheet. In this way, the above composite separators and the positive electrode sheets are connected through mechanical interlocking of the non-adhesive organic particles C. As a result, the obtained sample 1-1, sample 1-2, sample 1-3, sample 1-4, sample 1-5, sample 1-6, sample 1-7, sample 1-8, sample 1-9, and sample 1-10 all have high peeling strengths, indicating that these samples have good structural stability. In the above samples, a certain gap is formed between the positive electrode sheet and the base coating layer of the composite separator with which it is matched. Among the test objects, the peeling strengths of sample 1-3 and sample 1-5 are at a relatively high level, and the composite separators used in sample 1-3 and sample 1-5 can be firmly connected to the positive electrode sheets. The average particle sizes of the non-adhesive organic particles C contained in the composite separator 1-8 and the composite separators 1-9 are relatively large. The non-adhesive organic particles C with larger particle sizes are slightly more difficult to enter into the positive electrode active coating layer, and their stability in the positive electrode active coating layer is slightly lower, so that the peeling strengths of the sample 1-8 and sample 1-9 are lower than that of sample 1-3. However, the peeling strengths between the composite separator and the electrode sheet of the sample D1, the sample D2, and the sample D3 is obviously lower. In the process of preparing the composite separator D1, the particle size uniformity of the non-adhesive organic particles C is relatively low, and the particle size distribution is relatively wide. In addition, the thickness of the base coating layer formed on the surface of the porous substrate is relatively low. Therefore, the non-adhesive organic particles C can form a sufficient number of convex structures on the surface of the base coating layer. However, since the convex structures are different in size, some of the non-adhesive organic particles C with larger particle size are difficult to be firmly embedded in the thinner base coating layer. In the subsequent process of pressing the composite separator D1 to the positive electrode sheet, the non-adhesive organic particles C with large particle sizes contained in the porous substrate can enter and be pressed into the positive electrode active coating layer, but this also limits further approach of the composite separator D1 and the positive electrode sheet, so that a considerable part of the non-adhesive organic particles C, that is, the base coating layer of the composite separator D1 protrude but cannot be pressed into the positive electrode active coating layer of the positive electrode sheet. In addition, the sample D1 obtained by combining the composite separator D1 with the positive electrode sheet also has an uneven thickness and uneven surfac, which is caused by the uneven particle size distribution of the non-adhesive organic particles C. Since the number of the non-adhesive organic particles C capable of effectively connecting the composite separator D1 and the positive electrode sheet in the sample D1 is relatively small, and the thickness of the sample D1 is uneven, the measured peeling strength of the sample D1 is relatively low. The base coating layer included in the composite separator D2 is thin, so it is difficult to firmly fix the non-adhesive organic particles C. The non-adhesive organic particles C are easy to fall off from the porous active layer of the composite separator D2, as a result, the peeling strength of the sample D2 is low. The particle size of the non-adhesive organic particles C used to prepare the composite separator D3 is relatively small, so that the non-adhesive organic particles C are substantially completely embedded in the base coating layer in the composite separator D3, and it is difficult to see obvious convex structure on the surface of the base coating layer. When the composite separator D3 and the positive electrode sheet are pressed, the base coating layer of the composite separator D3 is directly combined with the positive electrode active coating layer of the positive electrode sheet (positive electrode sheet A), and the two are bonded by the adhesive polymers B in the base coating layer of the composite separator D3. Due to the uneven distribution of the binders, the measured peeling strength of the sample D4 prepared from the composite separator D3 is low. The non-adhesive organic particles C are not contained in the control separators, and the base coating layer of the control separator sample is flat, and there are no obvious convex structures. In the preparation of the control sample A, the control separator is used to composite with the positive electrode sheet (positive electrode sheet A). Similarly to the case of the above-mentioned sample D3, the control separator sample and the positive electrode sheet are bonded by the adhesive polymers B in the base coating layer of the control separator, so that the peeling strength of the control sample A obtained thereby is significantly lower than that of the sample 1-3. In the preparation of the control sample B by using the control separator and the positive electrode sheet B, the positive electrode active coating layer of the positive electrode sheet (positive electrode sheet B) contains the non-adhesive organic particles C. However, in the process of processing the positive electrode sheet, since cold pressing treatment is involved therein, a part of the non-adhesive organic particles C on the positive electrode sheet is crushed or damaged, as a result, the convex structures formed by the non-adhesive organic particles C on the surface of the positive electrode active coating layer of the positive electrode sheet are different in size. When the control separator is composited with the positive electrode sheet, although the connection between the control separator and the positive electrode sheet (the positive electrode sheet B) is also realized by the non-adhesive organic particles C, further the non-adhesive organic particles C used to establish the connection between the control separator and the positive electrode sheet are of different sizes, the thickness of the control sample B is not uniform , thus resulting in the peeling strength of control sample B being significantly lower than that of sample 1-3.

**Table 2. Composite separator/positive electrode sheet composite and corresponding peeling strength test results [0053]**

| Number of composite separator/positive electrode sheet composite | Composite separator | Positive electrode sheet | Peeling strength between composite separator and electrode sheet/(N/m) |
|---|---|---|---|
| Sample 1-1 | Composite separator 1-1 | Positive electrode sheet A | 0.75 |
| Sample 1-2 | Composite separator 1-2 | Positive electrode sheet A | 0.65 |
| Sample 1-3 | Composite separator 1-3 | Positive electrode sheet A | 0.73 |
| Sample 1-4 | Composite separator 1-4 | Positive electrode sheet A | 0.61 |
| Sample 1-5 | Composite separator 1-5 | Positive electrode sheet A | 0.77 |
| Sample 1-6 | Composite separator 1-6 | Positive electrode sheet A | 0.63 |
| Sample 1-7 | Composite separator 1-7 | Positive electrode sheet A | 0.6 |
| Sample 1-8 | Composite separator 1-8 | Positive electrode sheet A | 0.41 |
| Sample 1-9 | Composite separator 1-9 | Positive electrode sheet A | 0.55 |
| Sample 1-10 | Composite separator 1-10 | Positive electrode sheet A | 0.64 |
| Sample D1 | Composite separator D1 | Positive electrode sheet A | 0.12 |
| Sample D2 | Composite separator D2 | Positive electrode sheet A | 0.18 |
| Sample D3 | Composite separator 3 | Positive electrode sheet A | 0.24 |
| Control sample A | Control separator | Positive electrode sheet A | 0.31 |
| Control sample B | Control separator | Positive electrode sheet B | 0.42 |

### Example 2

### 1. Preparation of lithium-ion battery

### (1) Separator

In this example, the composite separator prepared in Example 1 is used as a separator for manufacturing lithium-ion batteries.

### (2) Preparation of positive electrode sheet

Positive electrode sheet A: the method for preparing positive electrode sheet A and the materials used are strictly consistent with those in Example 1.

Positive electrode sheet B: the method for preparing positive electrode sheet B and the materials used are strictly consistent with those in Example 1.

### (3) Preparation of negative electrode sheet

Negative electrode sheet A: a negative electrode active material graphite, a conductive agent acetylene black, a binder CMC, and a binder SBR are mixed in a mass ratio of 96.2:0.8:1.2:1.8, and then solvent deionized water is added to the mixed materials to obtain a mixture. The mixture is stirred under the action of a vacuum mixer until the system is uniform to obtain a negative electrode slurry. The negative electrode slurry is evenly coated on the negative electrode current collector with a coating thickness of 105 µm. After drying at room temperature, it was transferred to an oven for further drying, and then subjected to cold pressing and slitting to obtain the negative electrode sheet A.

Negative electrode sheet B: a negative electrode active material graphite, a conductive agent acetylene black, a binder CMC, and a binder SBR are mixed in a mass ratio of 96.2:0.8:1.2:1.8, and then solvent deionized water is added to the mixed materials to obtain a mixture. The mixture is stirred under the action of a vacuum mixer until the system is uniform to obtain a negative electrode slurry 1. A negative electrode active material graphite, a conductive agent acetylene black, a binder CMC, and a binder SBR are mixed in a mass ratio of 96.2:0.8:1.2:1.8, and then solvent deionized water is added to the mixed materials to obtain a mixture. The mixture is stirred under the action of a vacuum mixer until the system is uniform. Then butyl acrylate-styrene copolymer (tg=55 °C) is added thereto, wherein the particle size distribution and weight of the butyl acrylate-styrene copolymer are consistent with those of the butyl acrylate-styrene copolymer used in the process of preparing the composite separators 1-3. Followed by stirring fully to obtain the negative electrode slurry 2. The negative electrode slurry 1 is evenly coated on the negative electrode current collector with a thickness of 104 µm. After drying at room temperature, the coating surface formed by the negative electrode slurry 1 is further evenly coated with the negative electrode slurry 2 with a coating thickness of 1 µm. After drying at room temperature, it is transferred to an oven for further drying, and then subjected to cold pressing and slitting to obtain the negative electrode sheet B. The cold pressing and slitting operations performed during the preparation of the negative electrode sheet A and the negative electrode sheet B are consistent.

### (4) Assembling of core assembly

The composite separator is matched with the positive electrode sheet and the negative electrode sheet according to Table 3. The matched composite separator, the positive electrode sheet and the negative electrode sheet are used to prepare a core assembly according to the following method: stacking the positive electrode sheet, the composite separator and the negative electrode sheet in sequence, which are then subjected to hot pressing treatment. The hot pressing temperature is 80 degrees, the hot pressing pressure was 1500 MPa, and the hot pressing time is 30 seconds, thus obtaining the core assembly.

### (5) Preparation of electrolyte

The electrolyte is prepared according to the following ratios: EC:PC:DMC:EMC=30:5:20:45, VC: 2%, LiPF6: 12.5%.

### (6) Assembling of lithium-ion batteries

The core assembly prepared above is put into the inner cavity of the battery shell. After drying, the electrolyte obtained in this example is injected into the inner cavity of the battery shell. After processes such as vacuum packaging, standing, formation, and grading, etc., the lithium-ion battery in this example is obtained. The prepared lithium-ion batteries are numbered according to different combinations of composite separators, the positive electrode sheets and the negative electrode sheets. The corresponding relationships between the lithium-ion batteries and the composite separators, the positive electrode sheets and the negative electrode sheets used for the lithium-ion batteries are shown in Table 3. Except for the differences in the composition of the core assembly used, the other accessories, materials and the process operations involved in the preparation process of each lithium-ion battery are strictly consistent.

### 2. Performance test of lithium-ion battery

### Test object

The lithium-ion batteries prepared in this example are used test objects.

### Test items and corresponding methods

(1) Cycle performance test: At 25 degrees, the battery is placed for 60 min, and charged to 3.65 V with 1 C constant current and constant voltage (constant current and constant voltage charge capacity is recorded as C₀). Then the battery is placed for 60 min, and discharged to 2.5 V with 1 C constant current (constant current discharge capacity each time is recorded as C_{1...n}), and the cycle capacity retention rate is calculated by (C_{1...n}/C₀) *100%.
(2) DCR test: At 25 degrees, the battery is placed for 60 min, and charged to 3.65 V with 1 C constant current and constant voltage. Then the battery is placed for 60 min, and discharged to 2.5 V with 1 C constant current (discharge capacity is recorded as D). After placed for 60 min, the battery is charged with 1 C constant current and constant voltage until the battery capacity is (50%SOC= (D/2)) cut-off. The battery is placed for 60 min (voltage is recorded as V₀), charged with 1 C constant current for 10 seconds. Then the battery is placed for 30 min (voltage is recorded as V₁), the current I is recorded, and charging is carried out, wherein DCR is (V₁-V₀)/I.

Test results: the test results are shown in Table 3.

In the core assembly respectively included in battery 1-1, battery 1-2, battery 1-3, battery 1-4, battery 1-5, battery 1-6, battery 1-7, battery 1-8, battery 1-9, battery 1-10, battery D1, battery D2, and control battery B, a gap with a width not equal to zero is formed between the positive electrode sheet and the base coating layer disposed opposite thereof and between the negative electrode sheet and the base coating layer disposed opposite thereof, respectively, and an average width d of the gap ranges from 0.2 µm to 0.8 µm. However, it is difficult to form enough convex structures on the surface of the base coating layer in the battery D3 manufactured by the composite separator and the control battery A manufactured by the control separator. Therefore, in the core assembly respectively included in the battery D3 and the control battery A, it is basically difficult to form a gap a width not equal to zero between the positive electrode sheet and the base coating layer disposed opposite thereof and between the negative electrode sheet and the base coating layer disposed opposite thereof, respectively. Capacity retention rates of battery 1-1, battery 1-2, battery 1-3, battery 1-4, battery 1-5, battery 1-6, battery 1-7, battery 1-8, battery 1-9 and battery 1-10 at 100 cycles are all greater than 80%, which shows that all these batteries have good cycle performance. In the above-mentioned batteries, the connection between the composite separator and the positive electrode sheet and the negative electrode sheet is achieved by the non-adhesive organic particles C included in the composite separator. The more stable the connection between the composite separator and the positive electrode sheet and the negative electrode sheet, the higher the structural stability of the battery and the better the cycle performance of the battery. Therefore, the relative size relationship of the capacity retention rate of the above-mentioned batteries is basically consistent with the relative size relationship of the peeling strength of the composite separator/positive electrode sheet composite samples (sample 1-1, sample 1-2, sample 1-3, sample 1-4, sample 1-5, sample 1-6, sample 1-7, sample 1-8, sample 1-9, sample 1-10) included in these batteries in Example 1. On the other hand, DCR of battery 1-1, battery 1-2, battery 1-3, battery 1-4, battery 1-5, battery 1-6, battery 1-7, battery 1-8, battery 1-9, and battery 1-10 are all less than 0.7 mQ, which shows that these batteries can achieve efficient and smooth lithium ion transmission during the test process and have excellent lithium ion transmission kinetic characteristics. In the above-mentioned batteries, non-adhesive organic particles C are used to realize connection between composite separator and positive electrode sheet, and connection between composite separator and negative electrode sheet, so that there is a certain gap between the base coating layer of the composite separator and the positive electrode sheet, and there is a certain gap between the base coating layer of the composite separator and the negative electrode sheet, which significantly improves the penetration of the electrolyte in the core and improves the transmission efficiency of lithium ions between the positive electrode sheet and the negative electrode sheet, so that the DCR values of the above-mentioned batteries can be maintained at a low level.

Compared with battery 1-1, battery 1-2, battery 1-3, battery 1-4, battery 1-5, battery 1-6, battery 1-7, battery 1-8, battery 1-9, and battery 1-10, the cycle retention rates of battery D1, battery D2, battery D3, control battery A and control battery B are significantly lower and the DCR values are significantly higher. Due to uneven size of the non-adhesive organic particles C used to prepare the composite separator D1, the thickness of the battery D1 is uneven, and there are regional differences in connection strengths between the composite separator D1 and the positive electrode sheet and connection strength between the composite separator D1 and the negative electrode sheet, which makes the structural stability of the battery D1 poor.Further, due to the uneven thickness, there are also regional differences in the transmission paths of the lithium ions between the positive electrode sheet and the negative electrode sheet, resulting in poor consistency of the lithium ion transmission efficiency of the battery D1. As the number of cycles increases, the battery D1 is polarized, resulting in poor transmission and accumulation of lithium ions between the positive electrode sheet and the negative electrode sheet, thus eventually leads to low cycle retention and high DCR of battery D1. However, the thickness of the base coating layer included in the composite separator D2 is relatively thin, resulting in poor fixing effect on the non-adhesive organic particles C. Therefore, as the number of cycles of the battery D2 increases, loosening of the non-adhesive organic particles C from the composite separator D2 intensifies, and the structural stability of battery D2 deteriorates, resulting in a low cycle capacity retention rate of battery D2. There are no obvious protruding non-adhesive organic particles C on the surfaces of the base coating layers in the composite separator D3 and the control separator. As a result, in battery D3 and control battery A, bonding between the composite separator and the positive electrode sheet, and bonding between the composite separator and the negative electrode sheet are mainly realized through the adhesive polymers B contained in the base coating layer of the composite separator. Compared with the connection between the composite separator and the positive electrode sheet and connection between the composite separator and the negative electrode sheet through mechanical interlocking by using the non-adhesive organic particles C, the battery in which connection realized by using the adhesive polymers B has poor structural stability. In addition, as the number of cycles increases, the adhesive polymers B in the composite separator will float in the base coating layer, thereby exacerbating the uneven distribution of the adhesive polymers B in the base coating layer. The adhesive polymers B that float to the composite surface of the composite separator and the positive electrode sheet or the negative electrode sheet are locally enriched, which will block the pores of the composite surface, which is not conducive to the penetration of the electrolyte in the battery and hinders the migration of lithium ions between the positive electrode sheet and the composite separator or between the negative electrode sheet and the composite separator, as a result, the capacity retention rate of battery D3 and control battery A is decreased and DCR is increased. Since the content of adhesive polymers B in the base coating layer of the control separator is higher than that in the base coating layer of the composite separator D3, compared with battery D3 using the composite separator D3, the base coating layer in control battery A using control separator has worse air permeability and permeability during the cycle, resulting in the lowest cycle capacity retention rate and highest DCR of the control battery A among the test objects. In the control battery B, although the connection between the control separator and the positive electrode sheet and connection between the control separator and the negative electrode sheet are also realized through mechanical interlocking of the non-adhesive organic particles C, it differs from other test objects containing non-adhesive organic particles C in that the non-adhesive organic particles C contained in the control battery B are pre-embedded in the positive active coating layer (positive electrode sheet B) and the negative active coating layer (negative electrode sheet B). Since cold pressing is involved during the processing of both the positive and negative electrode sheets, the presence of the non-adhesive organic particles C leads to insufficient cold pressing of the electrode sheets, resulting in deterioration in the coating layer quality of the positive active coating layer and/or the negative active coating layer. Cold pressing will also, to a certain extent, damage and deform the non-adhesive organic particles C protruding from the positive active coating layer and the negative active coating layer, resulting in uneven connection strength between the control separator and the positive and negative electrode sheets, and uneven thickness of the control battery B. Therefore, as the number of cycles increases, poor transmission of lithium ions inside the control battery B is aggravated, resulting in poor cycle performance and poor lithium ion kinetic transmission characteristics of the control battery B.

**Table 3. Performance test results of the lithium-ion battery and its corresponding core assembly prepared in this example [0080]**

| Number of lithium-ion battery | Composite separator | Positive electrode sheet | Negative electrode sheet | Capacity retention rate at 25°C 1C/1C at 1000 cycles | 25°C 50%SOC charging DCR/mΩ |
|---|---|---|---|---|---|
| Battery 1-1 | Composite separator 1-1 | Positive electrode sheet A | Negative electrode sheet A | 97.4% | 0.3 |
| Battery 1-2 | Composite separator 1-2 | Positive electrode sheet A | Negative electrode sheet A | 93.2% | 0.41 |
| Battery 1-3 | Composite separator 1-3 | Positive electrode sheet A | Negative electrode sheet A | 97.1% | 0.31 |
| Battery 1-4 | Composite separator 1-4 | Positive electrode sheet A | Negative electrode sheet A | 85.5% | 0.39 |
| Battery 1-5 | Composite separator 1-5 | Positive electrode sheet A | Negative electrode sheet A | 97.8% | 0.48 |
| Battery 1-6 | Composite separator 1-6 | Positive electrode sheet A | Negative electrode sheet A | 88.9% | 0.55 |
| Battery 1-7 | Composite separator 1-7 | Positive electrode sheet A | Negative electrode sheet A | 84.3% | 0.43 |
| Battery 1-8 | Composite separator 1-8 | Positive electrode sheet A | Negative electrode sheet A | 82.7% | 0.39 |
| Battery 1-9 | Composite separator 1-9 | Positive electrode sheet A | Negative electrode sheet A | 83.4% | 0.66 |
| Battery 1-10 | Composite separator 1-10 | Positive electrode sheet A | Negative electrode sheet A | 89.1% | 0.35 |
| Battery D1 | Composite separator D1 | Positive electrode sheet A | Negative electrode sheet A | 74% | 0.82 |
| Battery D2 | Composite separator D2 | Positive electrode sheet A | Negative electrode sheet A | 73.2% | 0.76 |
| Battery D3 | Composite separator D3 | Positive electrode sheet A | Negative electrode sheet A | 76.4% | 0.82 |
| Control battery A | Control separator | Positive electrode sheet A | Negative electrode sheet A | 65.6% | 0.85 |
| Control battery B | Control separator | Positive electrode sheet B | Negative electrode sheet B | 68.3% | 0.71 |

### Example 3

### 1. Preparation of composite separator

In this example, composite separators are prepared by referring to the method for preparing the composite separators of the experimental groups in Example 1. Similar to the composite separators of the experimental groups in Example 1, the composite separator prepared in this example includes a porous substrate and a porous active layer coated on the surface of the porous substrate. The main components of coating slurry used to prepare the porous active layer include inorganic particles A, adhesive polymers B, and non-adhesive organic particles C. In this example, the adhesive polymers B and the non-adhesive organic particles C used for preparing the above-mentioned coating slurry are the same as the corresponding materials used for prepaing composite separator 1-3 in Example 1. That is, polyvinylacetate is used as an adhesive polymer B, butyl acrylate-styrene copolymer (tg=55 °C; D₁₀=2.5 µm, D₅₀=4 µm, D₉₀=6.5 µm) is used as a non-adhesive organic particle C. This example differs from the preparation of composite separator 1-3 in Example 1 in that different coating slurries are prepared by using inorganic particles A with different particle size distributions or different types, and the above-mentioned adhesive polymers B and the non-adhesive organic particles C. The composite separators prepared by using different coating slurries and the inorganic particles A contained therein are specifically shown in Table 4. In this example, the coating slurry used to prepare the composite separator is prepared as follows: weighing the desired materials in parts by mass, specifically, weighing 80 parts of inorganic particles A, 10 parts of polyvinylacetate, 10 parts of butyl acrylate-styrene copolymer, 5 parts of leveling agent, and 120 parts of pure water; mixing the above-mentioned materials, and fully stirring until uniform, thereby obtaining the above-mentioned coating slurry. Among the raw materials used for preparing the above-mentioned coating slurry, except for the inorganic particles A, all materials are strictly consistent with those used for preparing the composite separator 1-3 in Example 1. The film substrate used as the porous substrate in this example is the same as the polyethylene film used in Example 1 for preparing the composite separator 1-3. The coating slurry prepared above is coated on two surfaces of the porous substrate respectively. The coating thickness is controlled based on the preset thickness of porous active layer, thereby obtaining a semi-finished separator. The semi-finished separator is transferred into an oven and fully dried, thereby forming a porous active layer on two surfaces of the porous substrate which are arranged oppositely to each other. The porous coating layer includes a base coating layer and the non-adhesive organic particles C embedded in the base coating layer. The base coating layer is composed of inorganic particles A and adhesive polymers B, and the non-adhesive organic particles C protrude from the surface of the base coating layer, thereby preparing a composite separator. The composite separators prepared in this example are numbered as composite separator 2-1, composite separator 2-2, composite separator 2-3, composite separator 2-4, composite separator 2-5, and composite separator 2-6, respectively. The related compositions and structural characteristics of these composite separators are shown in Tables 4 and 5. For the convenience of comparison, the related compositions and structural characteristics corresponding to the composite separator 1-3 provided in Example 1 are also shown in Tables 4 and 5. In Table 5, "D₅₀ (A)" refers to the D₅₀ of the inorganic particles A, "D₅₀ (C)" refers to the D₅₀ of the non-adhesive organic particles C, "D₅₀ (A)/D₅₀ (C)" refers to the ratio of the D₅₀ of the inorganic particles A to the D₅₀ of the non-adhesive organic particles C used in the composite separator, and "D₅₀ (A)/h" refers to the ratio of the D₅₀ of the inorganic particles A to the D₅₀ of the non-adhesive organic particles C used in the composite separator.

**Table 4. Composite separators and the corresponding inorganic particles A thereof [0085]**

| Number of composite separator | Types of inorganic particles A and mohs hardness thereof | Particle size distribution of inorganic particles A | | |
|---|---|---|---|---|
| | | D₁₀/µm | D₅₀/µm | D₉₀/µm |
| Composite separator 1-3 | Boehmite, mohs hardness is 3 | 0.1 | 0.4 | 1.1 |
| Composite separator 2-1 | Boehmite, mohs hardness is 3 | 0.1 | 0.2 | 1 |
| Composite separator 2-2 | Boehmite, mohs hardness is 3 | 0.5 | 1.6 | 2 |
| Composite separator 2-3 | Boehmite, mohs hardness is 3 | 0.06 | 0.1 | 0.15 |
| Composite separator 2-4 | Boehmite, mohs hardness is 3 | 1 | 2 | 2.5 |
| Composite separator 2-5 | TiO₂, mohs hardness is 5.5 | 0.2 | 0.4 | 1.5 |
| Composite separator 2-6 | SiO₂, mohs hardness is 7 | 0.15 | 0.4 | 1.2 |

**Table 5. Related compositions and structural characteristics of composite separators [0087]**

| Number of composite separator | D₅₀(A)/µm | D₅₀(C)/µm | Average thickness of base coating layer h/µm | D₅₀(A)/ D₅₀(C) | D₅₀(A)/h |
|---|---|---|---|---|---|
| Composite separator 1-3 | 0.4 | 4 | 1 | 0.1 | 0.4 |
| Composite separator 2-1 | 0.2 | 4 | 1 | 0.05 | 0.2 |
| Composite separator 2-2 | 1.6 | 4 | 2.5 | 0.4 | 0.64 |
| Composite separator 2-3 | 0.1 | 4 | 1 | 0.025 | 0.1 |
| Composite separator 2-4 | 2 | 4 | 2.2 | 0.5 | 0.91 |
| Composite separator 2-5 | 0.4 | 4 | 1 | 0.1 | 0.4 |
| Composite separator 2-6 | 0.4 | 4 | 1 | 0.1 | 0.4 |

### 2. Testing for peeling strength of composite separators and electrode sheets

### Test object

The composite separator prepared in this example is used as a test object.

### Test method

### (1) Preparation of positive electrode sheet A for testing

The method and materials are strictly consistent with the method and materials used for preparing positive electrode sheet A in Example 1.

### (2) Preparation of composite separator/positive electrode sheet composite for testing peeling strength

The composite separator/positive electrode sheet composite used for testing in this example is prepared according to the method for preparing the test composite separator/positive electrode sheet composite in Example 1 by using the composite separator and the positive electrode sheet A prepared in this example. Except that the composite separator and positive electrode sheet composite are matched according to the way in this example, the materials and methods used for preparing the composite separator/positive electrode sheet composite in this example are strictly consistent with the method and materials used for preparing the test composite separator/positive electrode sheet composite in Example 1. The composite separator/positive electrode sheet composites prepared in this example are numbered as sample 2-1, sample 2-2, sample 2-3, samples 2-4, samples 2-5, and sample 2-6, respectively. The corresponding numbers of these composite separator/positive electrode sheet composites and the composite separators and positive electrode sheets included therein are specifically shown in Table 6. The edges of the composite separators/positive electrode sheet composites are cut to a size of 10 mm*150 mm. The composite separator and the positive electrode sheet composites are slightly separated at the edge of the composite separators/positive electrode sheet composites, and clamped at both ends of the peeling strength tester respectively. Then the instrument is started to tear the composite separators and the positive electrode sheets, and peeling strength at the time of peeling is recorded.

### Test results

The test results are shown in Table 6. For convenience of comparison, the adhesive performance of sample 1-3 prepared from composite separator 1-3 used in Example 1 are also shown in Table 6. The types and particle size distribution of non-adhesive organic particles C contained in composite separator 1-3, composite separator 2-1, composite separator 2-2, composite separator 2-3, composite separator 2-4, composite separator 2-5, and composite separator 2-6 are the same. The above composite separators differ from each other in the inorganic particles A. By comparing the measured peeling strengths of sample 1-3, sample 2-1, sample 2-2, sample 2-3 and sample 2-4 using composite separator 1-3, composite separator 2-1, composite separator 2-2, composite separator 2-3 and composite separator 2-4, respectively, it can be seen that when the composite separator adopts inorganic particles A of the same material type, the relative size of the inorganic particles A and non-adhesive organic particles C will affect the peeling strengths between the composite separator and the positive electrode sheets. As the ratio of D₅₀ of inorganic particles A to D₅₀ of non-adhesive organic particles C increases, the number of particles with small particle size included in inorganic particles A increases, and inorganic particles A with small particle size are more likely to fill the gaps around the non-adhesive organic particles C, thereby improving the compactness of the porous active layer, which is conducive to firmly fix the non-adhesive organic particles C in the porous active layer, thereby establishing a stable connection between the composite separator and the positive electrode sheet, which is reflected in the increase in the peeling strength of the composite composed of the composite separator and the positive electrode sheet. By comparing the peeling strengths of the sample 1-3, sample 2-5, and sample 2-6, it can be shown that the peeling strength between the composite separator and the positive electrode sheet will be different if inorganic particles A with different mohs hardness are used.

**Table 6. Composite separator/positive electrode sheet composite and corresponding peeling strength test results [0099]**

| Number of composite separator/positive electrode sheet composite | Composite separator | Positive electrode sheet | Peeling strength of composite separator and electrode sheet/(N/m) |
|---|---|---|---|
| Sample 1-3 | Composite separator 1-3 | Positive electrode sheet A | 0.73 |
| Sample 2-1 | Composite separator 2-1 | Positive electrode sheet A | 0.65 |
| Sample 2-2 | Composite separator 2-2 | Positive electrode sheet A | 0.77 |
| Sample 2-3 | Composite separator 2-3 | Positive electrode sheet A | 0.58 |
| Sample 2-4 | Composite separator 2-4 | Positive electrode sheet A | 0.79 |
| Sample 2-5 | Composite separator 2-5 | Positive electrode sheet A | 0.6 |
| Sample 2-6 | Composite separator 2-6 | Positive electrode sheet A | 0.54 |

### Example 4

### 1. Preparation of lithium-ion battery

### (1) Separator

In this example, the composite separator prepared in Example 3 is used as a separator for manufacturing lithium-ion batteries.

### (2) Preparation of positive electrode sheet

The method and materials are strictly consistent with the method and materials used for preparing positive electrode sheet A in Example 1.

### (3) Preparation of negative electrode sheet

The method and materials are strictly consistent with the method and materials used for preparing positive electrode sheet A in Example 1.

### (4) Assembling of core assembly

The composite separator obtained in Example 3 is matched with the positive electrode sheet and the negative electrode sheet obtained in this example. The matched composite separator, the positive electrode sheet and the negative electrode sheet are used to prepare a core assembly according to the following method: stacking the positive electrode sheet, the composite separator and the negative electrode sheet in sequence, which are then subjected to hot pressing treatment. The hot pressing temperature is 80 degrees, the hot pressing pressure was 1500 MPa, and the hot pressing time is 30 seconds, thus obtaining the core assembly.

### (5) Preparation of electrolyte

The electrolyte used in this example is strictly consistent with the electrolyte prepared in Example 2.

### (6) Lithium-ion battery assembly

The core assembly prepared above is put into the inner cavity of the battery shell. After drying, the electrolyte obtained in this example is injected into the inner cavity of the battery shell. After processes such as vacuum packaging, standing, formation, and grading, etc., the lithium-ion battery in this example is obtained. The specific operation steps involved in the assembly process are strictly consistent with the method for assembling the lithium-ion battery in Example 2. The prepared lithium-ion batteries are numbered according to different composite separators. The corresponding relationships between the lithium-ion batteries and the composite separators used for the lithium-ion batteries are shown in Table 7.

### 2. Performance test of lithium-ion battery

### Test object

The lithium-ion batteries prepared in this example are used test objects.

### Test items and corresponding methods

(1) Cycle performance test: the test method and test conditions are consistent with the test method and test conditions used in the cycle performance test of lithium-ion battery in Example 2.
(2) DCR test: the test method and test conditions are consistent with the test method and test conditions used in the DCR test of lithium-ion battery in Example 2.

Test results: the test results are shown in Table 7. Combined with the test results in Example 3, it can be seen that as the ratio of D₅₀ of inorganic particles A to D₅₀ of non-adhesive organic particles C increases, after pressing, the greater the connection strength between the composite separator and the electrode sheet, the stronger the structural stability of the core is. In the test objects of this example, by comparing the test results of battery 1-3, battery 2-1, and battery 2-3, it can be seen that as the ratio of D₅₀ of the inorganic particles A to the non-adhesive organic particles C used in the battery increases, the cycle capacity retention rate of the battery increases as well. This is because, to a certain extent, improving the structural stability of the battery by increasing the compactness of the porous active layer of the composite separator is beneficial to improving the cycle performance of the battery. Therefore, within a certain extent, as the connection stability between the composite separator and the positive electrode sheet and the negative electrode sheet increases, the structural stability of the battery increases, and the cycle performance of the battery is improved. However, as the compactness of the porous active layer continues to increase, the air permeability of the composite separator becomes worse, which is not conducive to the penetration of the electrolyte into the composite separator and hinders the transmission of lithium ions. Therefore, by comparing the test results of the battery 1-3, the battery 2-2, and the battery 2-4, it can be seen that as the ratio of D₅₀ of the inorganic particles A to the non-adhesive organic particles C used in the battery increases, the measured value of DCR of the battery shows an obvious upward trend, while as the number of cycles increases, under the action of DCR, lithium ions can not be transmitted smoothly and are accumulated, which in turn will damage the cycle performance of the battery. In addition, by comparing the test results of the battery 1-3, battery 2-5, and battery 2-6, when the particle size distribution of the porous active layer used to construct the composite separator is the same, the comprehensive performance of the battery corresponding to the composite separator prepared by the inorganic particles A with a Mohs hardness of 3 is best.

**Table 7. Performance test results of the lithium-ion battery and its corresponding core assembly prepared in this example [0122]**

| Number of lithium-ion battery | Composite separator | Capacity retention rate at 25°C 1C/1C at1000 cycles | 25°C 50%SOC charging DCR/mΩ |
|---|---|---|---|
| Battery 1-3 | Composite separator 1-3 | 97.1% | 0.31 |
| Battery 2-1 | Composite separator 2-1 | 90.9% | 0.41 |
| Battery 2-2 | Composite separator 2-2 | 95.3% | 0.46 |
| Battery 2-3 | Composite separator 2-3 | 88.2% | 0.49 |
| Battery 2-4 | Composite separator 2-4 | 92.8% | 0.56 |
| Battery 2-5 | Composite separator 2-5 | 92.4% | 0.38 |
| Battery 2-6 | Composite separator 2-6 | 91.7% | 0.43 |

### Example 5

### 1. Preparation of composite separator

In this example, composite separators are prepared by referring to the method for preparing the composite separators of the experimental groups in Example 1. Similar to the composite separators of the experimental groups in Example 1, the composite separator prepared in this example includes a porous substrate and a porous active layer coated on the surface of the porous substrate. The main components of coating slurry used to prepare the porous active layer include inorganic particles A, adhesive polymers B, and non-adhesive organic particles C. In this example, the inorganic particles A and the adhesive polymers B used for preparing the above-mentioned coating slurry are the same as the corresponding materials used for prepaing composite separator 1-3 in Example 1. That is, boehmite (with a mohs hardness of 3; D₁₀=0.1 µm, D₅₀=0.4 µm, D₉₀=1.1 µm) is used as a inorganic particle A, polyvinylacetate is used as an adhesive polymer B. This example differs from the preparation of composite separator 1-3 in Example 1 in that different coating slurries are prepared by using different types of non-adhesive organic particles C and the above-mentioned inorganic particles A and adhesive polymers B. The composite separators prepared by using different coating slurries and the non-adhesive organic particles C contained therein are specifically shown in Table 8. In this example, the coating slurry used to prepare the composite separator is prepared as follows: weighing the desired materials in parts by mass, specifically, weighing 80 parts of boehmite, 10 parts of polyvinylacetate, 10 parts of non-adhesive organic particles C, 5 parts of leveling agent, and 120 parts of pure water; mixing the above-mentioned materials, and fully stirring until uniform, thereby obtaining the above-mentioned coating slurry. Among the raw materials used for preparing the above-mentioned coating slurry, except for the non-adhesive organic particles C, all materials are strictly consistent with those used for preparing the composite separator 1-3 in Example 1. The film substrate used as the porous substrate in this example is the same as the polyethylene film used in Example 1 for preparing the composite separator 1-3. The coating slurry prepared above is coated on two surfaces of the porous substrate respectively. The coating thickness is controlled based on the preset thickness of porous active layer, thereby obtaining a semi-finished separator. The semi-finished separator is transferred into an oven and fully dried, thereby forming a porous active layer on two surfaces of the porous substrate which are arranged oppositely to each other. The porous coating layer includes a base coating layer and the non-adhesive organic particles C embedded in the base coating layer. The base coating layer is composed of inorganic particles A and adhesive polymers B, and the non-adhesive organic particles C protrude from the surface of the base coating layer, thereby preparing a composite separator. The composite separators prepared in this example are numbered as composite separator 3-1, composite separator 3-2, and composite separator 3-3, respectively. The related compositions and structural characteristics of the above composite separators are shown in Table 8. For the convenience of comparison, the related compositions and structural characteristics corresponding to the composite separator 1-3 provided in Example 1 are also shown in Table 8. In Table 8, "D₅₀/h" refers to the ratio of the D₅₀ of the non-adhesive organic particles C to the average thickness h of the base coating layer of the composite separator.

**Table 8. Related composition and structural information of composite separator [0127]**

| Number of composite separator | Types of non-adhesive organic particles C and Tg values thereof | Particle size distribution of non-adhesive organic particles C | | | | Average thickness of base coating layer h/µm | D₅₀/h |
|---|---|---|---|---|---|---|---|
| | | D₁₀/ µm | D₅₀/ µm | D₉₀/ µm | (D₉₀-D₁₀)/D₅₀ | | |
| Composite separator 1-3 | Butyl acrylate-styrene copolymer Tg=55°C | 2.5 | 4 | 6.5 | 1 | 1 | 4 |
| Composite separator 3-1 | Ethylene-acrylic acid copolymer Tg=87°C | 1.8 | 3.8 | 5.7 | 1.02 | 1 | 3.8 |
| Composite separator 3-2 | Polymethyl methacrylate Tg=105°C | 2.4 | 4 | 6.2 | 0.95 | 1 | 4 |
| Composite separator 3-3 | Polymethyl acrylate Tg=8°C | 2.8 | 4.1 | 6.5 | 0.9 | 1 | 4.1 |

### 2. Testing for peeling strength of composite separators and electrode sheets

### Test object

The composite separator prepared in this example is used as a test object.

### Test method

### (1) Preparation of positive electrode sheet A for testing

The method and materials are strictly consistent with the method and materials used for preparing positive electrode sheet A in Example 1.

### (2) Preparation of composite separator/positive electrode sheet composite for testing peeling strength

The composite separator/positive electrode sheet composite used for testing in this example is prepared according to the method for preparing the test composite separator/positive electrode sheet composite in Example 1 by using the composite separator and the positive electrode sheet A prepared in this example. Except that the composite separator and positive electrode sheet composite are matched according to the way in this example, the materials and methods used for preparing the composite separator/positive electrode sheet composite in this example are strictly consistent with the method and materials used for preparing the test composite separator/positive electrode sheet composite in Example 1. The composite separator/positive electrode sheet composites prepared in this example are numbered as sample 3-1, sample 3-2, and sample 3-3. The corresponding numbers of these composite separator/positive electrode sheet composites and the composite separators and positive electrode sheets included therein are specifically shown in Table 9. The edges of the composite separators/positive electrode sheet composites are cut to a size of 10 mm*150 mm. The composite separator and the positive electrode sheet composites are slightly separated at the edge of the composite separators/positive electrode sheet composites, and clamped at both ends of the peeling strength tester respectively. Then the instrument is started to tear the composite separators and the positive electrode sheets, and peeling strength at the time of peeling is recorded.

### Test results

The test results are shown in Table 9. For convenience of comparison, the adhesive performance of sample 1-3 prepared from composite separator 1-3 used in Example 1 are also shown in Table 9. The difference among composite separator 1-3, composite separator 3-1, composite separator 3-2 and composite separator 3-3 lies in that these composite separators are prepared by using non-adhesive organic particles C with different Tg values. According to the peeling strength test results in this example, the above-mentioned composite separator can form a structurally stable composite with the positive electrode sheet. Among the test objects in this example, the peeling strengths of sample 1-3 including composite separator 1-3 and sample 3-1 including composite separator 3-1 are higher, which shows that the non-adhesive organic particles C with a Tg value between 30 °C and 90 °C can establish more reliable connection between composite separators and positive electrode sheets.

**Table 9. Composite separator/positive electrode sheet composite and corresponding peeling strength test results [0139]**

| Number of composite separator/positive electrode sheet composite | Composite separator | Positive electrode sheet | Peeling strength of composite separator and electrode sheet/(N/m) |
|---|---|---|---|
| Sample 1-3 | Composite separator 1-3 | Positive electrode sheet A | 0.73 |
| Sample 3-1 | Composite separator 3-1 | Positive electrode sheet A | 0.75 |
| Sample 3-2 | Composite separator 3-2 | Positive electrode sheet A | 0.63 |
| Sample 3-3 | Composite separator 3-3 | Positive electrode sheet A | 0.59 |

### Example 6

### 1. Preparation of lithium-ion battery

### (1) Separator

In this example, the composite separator prepared in Example 5 is used as a separator for manufacturing lithium-ion batteries.

### (2) Preparation of positive electrode sheet

The method and materials are strictly consistent with the method and materials used for preparing positive electrode sheet A in Example 1.

### (3) Preparation of negative electrode sheet

The method and materials are strictly consistent with the method and materials used for preparing positive electrode sheet A in Example 1.

### (4) Assembling of core assembly

The composite separator obtained in Example 5 is matched with the positive electrode sheet and the negative electrode sheet obtained in this example. The matched composite separator, the positive electrode sheet and the negative electrode sheet are used to prepare a core assembly according to the following method: stacking the positive electrode sheet, the composite separator and the negative electrode sheet in sequence, which are then subjected to hot pressing treatment. The hot pressing temperature is 80 degrees, the hot pressing pressure was 1500 MPa, and the hot pressing time is 30 seconds, thus obtaining the core assembly.

### (5) Preparation of electrolyte

The electrolyte used in this example is strictly consistent with the electrolyte prepared in Example 2.

### (6) Lithium ion-battery assembly

The core assembly prepared above is put into the inner cavity of the battery shell. After drying, the electrolyte obtained in this example is injected into the inner cavity of the battery shell. After processes such as vacuum packaging, standing, formation, and grading, etc., the lithium-ion battery in this example is obtained. The specific operation steps involved in the assembly process are strictly consistent with the method for assembling the lithium-ion battery in Example 2. The prepared lithium-ion batteries are numbered according to different composite separators. The corresponding relationships between the lithium-ion batteries and the composite separators used for the lithium-ion batteries are shown in Table 10.

### 2. Performance test of lithium-ion battery

### Test object

The lithium-ion batteries prepared in this example are used test objects.

### Test items and corresponding methods

(1) Cycle performance test: the test method and test conditions are consistent with the test method and test conditions used in the cycle performance test of lithium-ion battery in Example 2.
(2) DCR test: the test method and test conditions are consistent with the test method and test conditions used in the DCR test of lithium-ion battery in Example 2.

Test results: the test results are shown in Table 10. By statistically analyzing the test results in this example, it can be seen that battery 1-3, battery 3-1, battery 3-2 and battery 3-3 can all obtain high cycle capacity retention rates, and their corresponding DCRs are all at a low level, which shows that these batteries have good cycle performance and lithium ion kinetic transmission characteristics.

**Table 10. Performance test results of the lithium-ion battery and its corresponding core assembly prepared in this example [0162]**

| Number of lithium-ion battery | Composite separator | Capacity retention rate at 25°C 1C/1C at cycles | 25°C 50%SOC charging DCR/mΩ |
|---|---|---|---|
| Battery 1-3 | Composite separator 1-3 | 97.1% | 0.31 |
| Battery 3-1 | Composite separator 3-1 | 96.8% | 0.37 |
| Battery 3-2 | Composite separator 3-2 | 94.3% | 0.41 |
| Battery 3-3 | Composite separator 3-3 | 94.1% | 0.39 |

## Claims

1. A composite separator comprising a porous substrate and a porous active layer; wherein:
the porous active layer is disposed on at least one surface of the porous substrate, the porous active layer comprises a base coating layer and non-adhesive organic particles C embedded in the base coating layer, the base coating layer comprises inorganic particles A and adhesive polymers B, and the base coating layer and the porous substrate are bonded by the adhesive polymers B;
an average thickness of the base coating layer is h, h≥0.5µm;
a ratio of a mass of the non-adhesive organic particles C to a mass of the base coating layer is (2 to 20):(70 to 90); and
a particle size distribution of the non-adhesive organic particles C satisfies (a) and (b): (a) 1<D₅₀/h≤5; (b) (D₉₀-D₁₀)/D₅₀≤3.

2. The composite separator according to claim 1, wherein the average thickness h of the base coating layer satisfies 1 µm≤h<8µm.

3. The composite separator according to claim 2, wherein the particle size distribution of the non-adhesive organic particles C satisfies D₅₀=3 to 8 µm.

4. The composite separator according to claim 1, wherein a ratio of D₅₀ of the inorganic particles A to D₅₀ of the non-adhesive organic particles C is (0.05 to 0.4):1.

5. The composite separator according to claim 4, wherein a ratio of D₅₀ of the inorganic particles A to the average thickness h of the base coating layer is 1:(1 to 15), and a mohs hardness of the inorganic particles A ranges from 2 to 10.

6. The composite separator according to claim 5, wherein a particle size distribution of the inorganic particles A satisfies: (D₉₀-D₁₀)/D₅₀=0.5 to 2.

7. The composite separator according to any one of claims 1 to 6, wherein the non-adhesive organic particles C comprise acrylate polymers, and a glass transition temperature of the acrylate polymers ranges from 30 °C to 90 °C.

8. The composite separator according to claim 7, wherein in the porous active layer, a ratio of the inorganic particles A to the adhesive polymers B to the non-adhesive organic particles C is (70 to 90):(2to 15):(2 to 20) in case of calculating parts by mass.

9. A lithium-ion battery comprising a core, wherein the core comprises an electrode sheet and the composite separator according to any one of claims 1 to 8.

10. The lithium-ion battery according to claim 9, wherein in the core, the composite separator is spaced apart from the electrode sheet, the porous active layer is disposed on one side of the composite separator facing the electrode sheet, the composite separator is connected to the electrode sheet through the non-adhesive organic particles C contained in the porous active layer, a gap is formed between the electrode sheet and the base coating layer disposed facing the electrode sheet after hot pressing, and an average width d of the gap after hot pressing ranges from 0.05 µm to 3 µm.
